# EUROPEAN PATENT APPLICATION

(11) **EP 0 823 204 A2**
(43) Date of publication of application: **11.02.1998**
(21) Application number: 97305827.4
(22) Date of filing: 01.08.1997
(51) Int. Cl.: A01G 25/06

(54) **Plant watering system**

(30) Priority: 05.08.1996 GB 9616459
(71) Applicant: Page, Roger Edward, Hayling Island, Hampshire PO11 0BD (GB)
(72) Inventor: Page, Roger Edward, Hayling Island, Hampshire PO11 0BD (GB)
(74) Representative: Knott, Stephen Gilbert

(57) **Abstract**

A plant watering system which comprises a pipe (10) and a water-absorbent body (16) attached to the pipe (10). In use, the pipe (10) supplies water to the body (16) which, in turn, releases water to soil or plant roots.

## Description

The invention relates to plant watering systems.

A known type of plant watering system comprises a pipe having an annular water-impervious wall and an opening extending across the wall for passage of water from the pipe. A sheet is disposed radially outwardly of the wall. The sheet extends over the opening and over a region of the wall surrounding the opening and has a face facing outwardly from the wall.

Examples of such systems are disclosed in US 3,901,448 and US 4,948,295. In these systems, the sheet is a non-water absorbent filter which both prevents ingress of soil into the pipe (so that the systems can be used under the soil) and which filters contaminant particles in the water. A similar system is described in US 4,094,466, although a bulbous filter member is used in place of a filter sheet. In all of these systems, flow of water from the pipe results purely from a pressure differential between the inside and outside of the pipe.

A disadvantage of these systems is that water flow through the opening is relatively fast and unless flow is carefully controlled (for example by shutting off the water supply to the pipe) overwatering and inefficient use of water result.

Another example is disclosed in US 3,946,762. In this case the sheet is a fabric sheath extending around the pipe. Flow of water may occur, at least partially, as a result of capillary action through the interstices of the fabric. However, the flow of water to the soil is also relatively fast and this can result in overwatering and inefficient use of water.

According to a first aspect of the invention there is provided a plant watering system comprising a pipe having an annular water-impervious wall and an opening extending across the wall for passage of water from the pipe, a sheet disposed radially outwardly of the wall, the sheet extending over the opening and over a region of the wall surrounding the opening and having a face facing outwardly from the wall, characterised by a water-impervious member disposed radially outwardly of the sheet and extending over the opening and over an area of the wall surrounding the opening, the member extending partially over the face such that the face has an exposed region over which the member does not extend and which is spaced from the opening, the sheet being water-absorbent such that water from the opening is drawn into the sheet and permeates through the sheet between the wall and the member to the exposed region for release therefrom to soil or plant roots.

According to a second aspect of the invention there is provided a plant watering system comprising an annular-sectioned pipe having a water-impervious wall and a plurality of holes each connecting the interior and exterior surfaces of the pipe for passage of water from the pipe, the holes being spaced from one another along the pipe, characterised by a corresponding number of arcuate water-absorbent members, each water-absorbent member covering a respective one of the holes, the inner surface of each water-absorbent member lying against a region of the outer surface of the pipe surrounding the corresponding hole, each water-absorbent member being held against the pipe by a respective one of a corresponding number of arcuate water-impervious members, the inner surface of each water-impervious member lying against the outer surface of the corresponding water-absorbent member, each water-impervious member lying radially outward of the corresponding hole and covering all the pipe wall around the corresponding hole, and each water-absorbent member having a region which protrudes from an edge of the corresponding water-impervious member, water from each hole being drawn into the corresponding water-absorbent member and permeating through said corresponding member to the protruding region thereof for release therefrom to soil or plant roots.

Plant watering systems according to the invention often use water more efficiently than known watering systems. Additionally, the use of plant watering systems according to the invention is less likely to cause waterlogging in poorly drained soils, compared to the use of known watering systems.

The following is a more detailed description of embodiments of the invention, by way of example, reference being made to the appended drawings in which:
Figure 1 is a diagrammatic representation of a first plant watering system;
Figure 2 is a perspective view showing part of the plant watering system of Figure 1;
Figure 3 is a schematic representation, partly in cross-section, of the part of the system shown in Figure 2;
Figure 4 shows part of a second plant watering system; and
Figure 5 is a schematic representation of a third plant watering system.

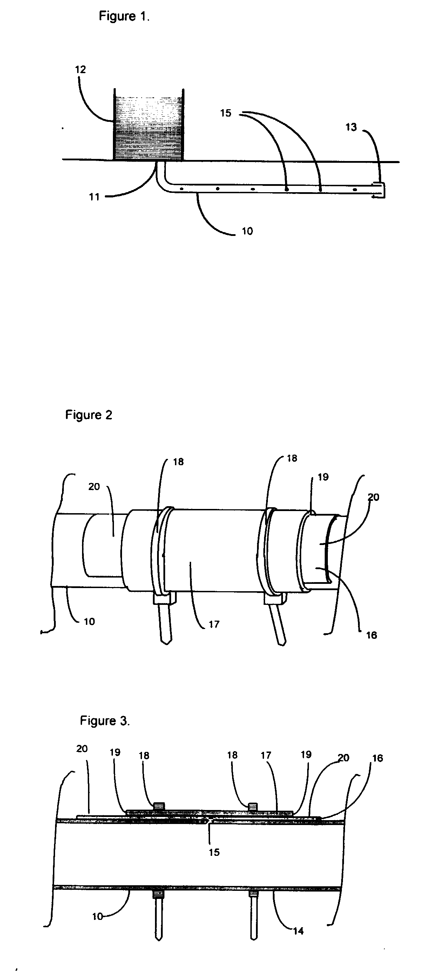

As shown in Figure 1, the first system comprises a pipe 10 connected at one end to an outlet 11 of a water tank 12 and closed at the other end by a plug 13.

The pipe 10 is of a type commonly used as garden hose, and has a water-impervious wall 14, is annular in section and is readily bent but resistant to compression in transverse directions. A suitable pipe, having a reinforced polyester wall and an internal diameter of nominally 12 mm is readily available.

As shown in Figures 1 and 3, the wall 14 is interrupted by a plurality of holes 15, each connecting the interior and exterior surfaces of the pipe 10. The holes 15 are spaced from one another along the length of the pipe 10 - adjacent holes 15 being spaced by about 300 mm. Each hole 15 is generally cylindrical having a diameter of about 2 mm.

Figures 2 and 3 show a portion of the pipe 10 which includes one of the holes 15. As described below, with reference to these figures, this hole 15 is associated with a sheet of cellulose 16, a short length of split pipe 17 and two ties 18. Although not shown, each one of the remaining holes 15, is similarly associated with a respective, cellulose sheet 16, length of split pipe 17, and two ties 18.

The hole 15 shown in Figure 3 is covered by the sheet of cellulose 16, which has been bent into an arcuate shape against the pipe 10 such that the inner surface of the sheet 16 lies against a region of the outer surface of the pipe 10 surrounding the hole 15. The cellulose sheet 16 is composed of a dense, irregular mesh of cellulose fibres and is both water-absorbent (as water tends to the drawn into the interstices between the fibres) and water-permeable (as water is able to permeate the sheet through the interstices). The sheet 16 is approximately 0.1 mm thick. The thickness is measured while the sheet 16 is being compressed by a pressure of 1 kgf/cm².

The sheet 16 is held against the pipe 10 by the short length of split pipe 17, which is water-impervious, flexible and is formed by cutting axially along the wall of a short length of pipe similar to the pipe 10. The split pipe 17 is snapped over the pipe 10 so that it embraces the pipe 10 and holds the sheet 16 against the pipe 10. The centre of the surface area of the split pipe 17 lies approximately, directly radially outwards of the hole 15 so that the split pipe 17 covers all the pipe wall around the hole 15. The sheet 16 protrudes from both axial end edges 19 of the split pipe 17 by about 2 mm to 50 mm, preferably 10 mm to 50 mm, so that the outer surface of the sheet 16 is exposed at these edges.

The split pipe 17 is held against the sheet 16 by the two ties 18 which pass around the pipe 10 and around the split pipe 17. The ties 18 are tensioned such that the sheet 16 is held sufficiently tightly against the pipe 10 so that water cannot leak through any gap between the outer surface of the pipe 10 and the inner surface of the sheet 16.

In operation, the pipe 10 and the associated cellulose sheets 16, lengths of split pipe 17 and ties 18 are buried under soil in an area to be watered. The depth under the soil should correspond approximately to the depth of the roots of the plants being grown (in many cases 75 mm to 150 mm). The tank 12 is positioned higher than the pipe 10.

To commence watering, the tank 12 is filled with water. A liquid fertilizer may be added to the water. Water enters the pipe 10 from the tank 12, pushing displaced air through the holes 15 and through the cellulose sheets 16 until the pipe 10 is full of water. Air may also pass to the tank 12. During this process, water passes through the holes 15 and comes into contact with the cellulose sheets 16. The water-absorbent nature of the cellulose sheets 16 then causes the water to enter and permeate the cellulose sheets 16. This process may be facilitated by the water-pressure in the pipe 10 generated by the weight of water above the outlet in the tank 12. Hence, at each hole 15, the water passes through the associated sheet 16 between the wall 14 and the associated split pipe 17 to the axially outermost, exposed regions 20 of the sheet 16. As shown in Figure 3, the distance travelled by the water from the holes 15 to the exposed regions 20 is greater than the width of the sheets 16. Hence the provision of the split pipes 17 obliges the water to travel a greater distance (compared to simply traversing the sheet 16) and this controls (restricts) the flow of water.

Watering is achieved by release of water from the axially outermost, exposed regions 20 of the sheets 16 to soil or directly to plant roots. The rate at which water is released to soil is dependent on the water content of the soil. When the soil water content is high, little if any release occurs, and when the soil is dry, greater release occurs. Water released from the cellulose sheets 16 is replaced by the sheets 16 absorbing water from the pipe 10 (this process being assisted by the water-pressure in the pipe 10). In this way, the water content of the sheets 16 is maintained at a relatively high level. Hence, the cellulose sheets 16 act as wicks drawing water from the pipe 10 and releasing it to soil or plant roots.

As water is released from the cellulose sheets 16, the water level in the tank 12 will, of course, drop. However, the changing weight of water in the tank 12 does not greatly affect the rate of water release from the sheets 16 as the flow of water is primarily driven by the wicking action of the sheets 16. The pressure in the pipe 10 is generally less than 1.5 psi.

It has been found that use of this plant watering system can result in similar or improved plant growth or crop yield compared to the use of known watering systems, while using less than 10% of the water used by the known watering systems. The dependency of the rate of water release on the water content of the soil is believed to contribute to this efficient use of water - as unnecessary watering of soil which is already damp is eliminated or greatly reduced. Also, as the soil surface remains generally dry, evaporation of water from the surface is eliminated or greatly reduced. Additionally, it is possible that water is released directly to plant roots.

As the system uses water with high efficiency, only occasional refilling of the tank 12 is required, and this can be conveniently done using a watering can, bucket or hose-pipe.

As explained above, the positions and dimensions of the lengths of split pipe 17 relative to those of the holes 15 help to prevent uncontrolled water flow through the holes 15.

After prolonged use the cellulose sheets 16 can become blocked by particulates in the water and scale deposition. Additionally the sheets 16 can be damaged by plant roots. When this happens, the pipe 10 may be dug up, the ties 18 cut and the lengths of split pipe 17 lifted off so that the cellulose sheets 16 can be removed and discarded. After clearing any blocked holes 15 by pushing through a rod, and flushing the pipe 10 with water, the holes 15 are covered by fresh cellulose sheets 16 and the lengths of split pipe 17 are replaced and secured with fresh ties 18. When the ties 18 are correctly tensioned and the system is filled with water, as described above, the cellulose sheets 16 become damp but water does not drip from them or drips only slowly. The system is now ready for burial and further use as described above.

The plant watering system described above can be modified in a number of ways.

It is not necessary to use cellulose sheets 16. Any member having a tendency to take in water and which is suitable for release of water to soil or plant roots may be used. For example, the water-absorbent member could be composed of a porous material.

The member could be composed of a polymer or natural organic material or inorganic material, more resistant to degradation by chemical and biological agents in soil. This could include cotton, or glass fibre mat treated to render the fibre surface more hydrophilic. As the life of such a member may be longer than that of cellulose, the body may be glued to the pipe instead of being secured as described above.

If the body is composed of a composite material, the material should have a hydrophilic component, so that the body is absorbent.

If cellulose sheets 16 are used their thickness is preferably between 0.1 mm to 0.3 mm. If sheets of other materials are used the ideal thickness will be dependent on the material, but generally between 0.05 mm to 3 mm.

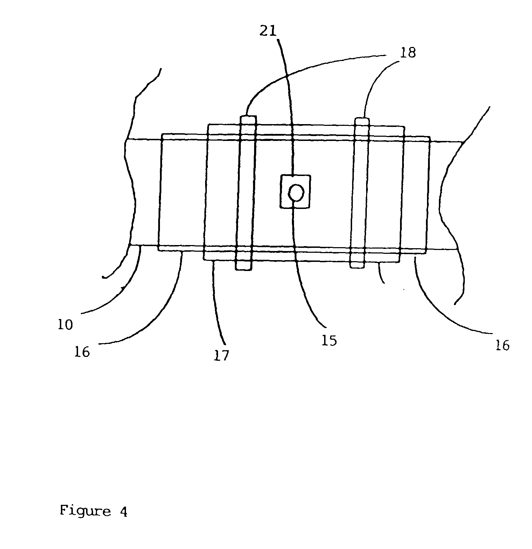

A second embodiment is shown in Figure 4. Parts of the second embodiment common to the embodiment described above with reference to Figures 1-3 are given the same reference numerals and are not described in detail. The second embodiment is generally similar to that described above with reference to Figures 1-3 with the exception that, at each hole 15, a respective sheet of water-absorbent paper 21 is provided under the associated sheet 16.

For clarity, the arrangement at a single hole 15 (shown in Figure 4) is described below, although it will be appreciated that a similar arrangement is provided at each of the other holes 15 in the pipe 10. The paper sheet 21, which is smaller than the associated sheet 16, has a first face which covers the associated hole 15 and contacts a region of the wall 14 surrounding the associated hole 15 and an opposed, second face which contacts the inner surface of the sheet 16.

The paper sheet 21 is held against the wall 14 by the sheet 16 which, as described above, is held against the pipe 14 by the split pipe 17 and the ties 18. The ties 18 are tightened such that the paper sheet 21 is held against the wall 14 by a force sufficient to prevent water from leaking between the wall 14 and the paper sheet 21 during use. The paper sheet 21 is such that it is not substantially compressed at the range of forces to which it is likely to be subjected in order to prevent such leakage of water. This range will include the minimum force necessary to prevent leakage and also higher forces, should the ties 18 be tightened more than necessary in order to achieve the minimum force.

Additionally, the paper sheet 21 has a lower wicking rate than the sheet 16.

In use, water from the hole 15 is drawn into the paper sheet 21 and permeates through the paper sheet 21 to the sheet 16. The water then enters the sheet 16 and permeates through the sheet 16, as described above, to the exposed regions 20 from where it may be released to soil or plant roots. As the paper sheet 21 has a low wicking rate relative to the sheet 16, the rate of flow of water from the hole 15 to the exposed regions 20 is determined by the properties of the paper sheet 21 and is largely independent of the sheet 16. As the sheet 21 is not substantially compressed by the forces likely to be applied by the ties 18, the rate of water flow does not vary with the tension in the ties 18.

The material of the sheet 21 does not have to be paper it could be any suitable material.

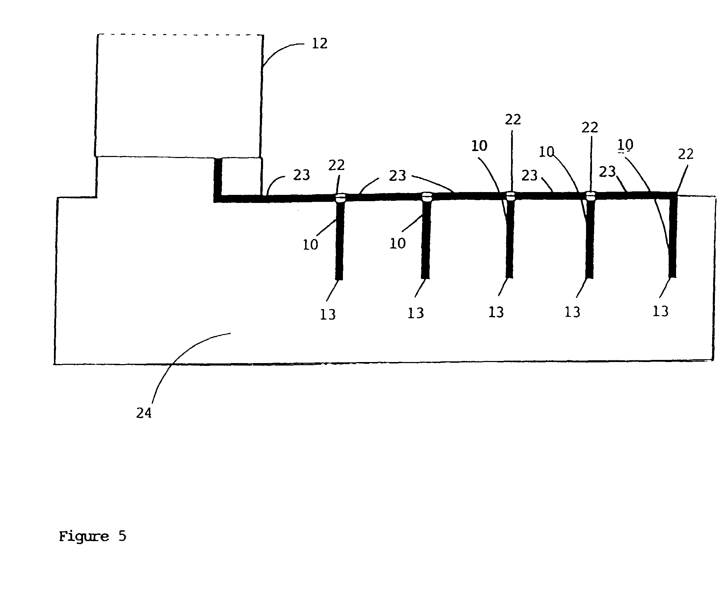

A third embodiment is shown in Figure 5. Parts of the third embodiment common to the first and second embodiments described above with reference to Figures 1 to 4 are given the same reference numerals and are not described in detail.

As shown in Figure 5, the third embodiment has a plurality of relatively short lengths of pipe 10. Each pipe 10 has one or more holes 15 (not shown) as described above. Each hole 15 is covered by a sheet 16 and a split pipe 17 (not shown) as described above in respect of the first embodiment or two sheets 16, 21 and a split pipe 17 (not shown) as described above in respect of the second embodiment. One end of each pipe 10 is closed by a respective plug 13.

The other ends of the pipes 10 are connected by connectors 22 and by short lengths of water-impervious, hole-free pipe 23 to a tank 12. The hole-free pipes 23 and the connectors 22 together form an enclosed, water-impervious conduit 22, 23 from which the pipes 10 branch.

In use, vertical holes are made in the soil 24 in the vicinity of plants to be watered. A respective pipe 10 is then inserted into each hole and soil is fed into the hole, as required, to fill any space around the pipe 10. The conduit 22, 23 is positioned on the surface of the soil connecting the pipes 10 to the tank 12 which is elevated relative to the conduit 22, 23. Water from the tank 12 passes through the conduit 22, 23 to the pipes 10 filling the pipes 10 and coming into contact with the sheets 16, 21 as described above. Water is released from the exposed regions 20 as described above. This embodiment is advantageous as it is not necessary to dig a trench to lay the pipes 10 and so the system can be installed adjacent to established plants with less risk of damage to the plants.

The plant watering systems described above can be modified in a number of ways. For example, the tank 12 may have an inlet provided with a valve operated by a ballcock in the tank 12. The ballcock would be arranged such that the valve closes when the water in the tank reaches a predetermined level. In use, the inlet would be attached to a source of water under pressure.

The internal diameter of the pipe 10 may be varied, but preferably is between 6 mm and 25 mm.

Instead of being flexible, as described above, the pipe 10 may be rigid.

The diameter of the holes 15 can be varied, although preferably the diameter will be between 1 mm and 4 mm. Additionally each sheet 16 or water-absorbent member may cover a plurality of closely spaced holes 15.

The spacing of the holes 15 and the sheets 16 or water-absorbent members along the pipe may be varied as required for adequate watering.

The split pipes 17 may be replaced by a continuous second pipe having an inner diameter generally equal to the outer diameter of the pipe 10 with the sheet 16. Such a continuous pipe would be provided with apertures to expose the cellulose sheets 16.

In this case, the separate cellulose sheets 16 may be replaced by a continuous sheet.

Instead of one end of the pipe 10 or conduit being connected to a tank 12, each end of the pipe 10 or conduit may be connected to a respective tank 12. In this case, no plug 13 is used.

Alternatively, the tank 12 may supply more than one pipe 10 or conduit.

Alternatively, a plurality of tanks 12 and a plurality of pipes 10 may be provided, each pipe 10 having a respective tank 12 connected at each end and each tank 12 being connected to a plurality of pipes 10 so that the pipes 10 and the tanks 12 form a network.

It is not necessary for each length of split pipe 17 to be held against the corresponding sheet 16 by two ties 18 of the type shown in Figures 2 and 3. Different numbers of and/or different types of ties may be used so long as the sheets 16 are held sufficiently tightly against the pipe 10 so that water cannot leak through any gap between the outer surface of the pipe 10 and the inner surfaces of the sheets 16. For example, three ties 18 of the type shown in Figures 2 and 3 may be used.

## Claims

1. A plant watering system comprising a pipe (10) having an annular water-impervious wall (14) and an opening (15) extending across the wall (14) for passage of water from the pipe (10), a sheet (16) disposed radially outwardly of the wall (14), the sheet (16) extending over the opening (15) and over a region of the wall (14) surrounding the opening (15) and having a face facing outwardly from the wall (14), characterised by a water-impervious member (17) disposed radially outwardly of the sheet (16) and extending over the opening (15) and over an area of the wall (14) surrounding the opening (15), the member (17) extending partially over the face such that the face has an exposed region (20) over which the member (17) does not extend and which is spaced from the opening (15), the sheet (16) being water-absorbent such that water from the opening (15) is drawn into the sheet (16) and permeates through the sheet (16) between the wall (14) and the member (17) to the exposed region (20) for release therefrom to soil or plant roots.

2. A system according to claim 1, wherein the sheet (16) is composed of cellulose.

3. A system according to claim 1, wherein the sheet (16) is hydrophilic and comprises a polymer, glass fibre or other material which is not degraded significantly by chemical or biological agents in soil.

4. A system according to any preceding claim, wherein said opening (15) is one of a plurality of holes (15) each extending across the wall (14), the holes (14) being spaced from one another along the pipe (10), said sheet (16) being one of a corresponding number of water-absorbent sheets (16), each sheet disposed radially outwardly of the wall (14) and extending over a respective one of the holes (15) and over a corresponding region of the wall (14) surrounding said respective one of the holes (15), each sheet (16) having a face facing outwardly from the wall (14), a further face of each sheet opposed to said outwardly facing face lying against the corresponding surrounding region.

5. A system according to claim 4, wherein the member (17) is one of a corresponding number of water-impervious members (17), each member (17) disposed radially outwardly of a respective one of the sheets (16) and extending over the corresponding hole (15) and a corresponding area of the wall (14) surrounding said corresponding hole (15), each member (17) extending partially over, in contact with, the outwardly facing face of the corresponding sheet (16) such that each outwardly facing face has an exposed region (20) over which the corresponding member (17) does not extend and which is spaced from the corresponding hole (15).

6. A system according to any preceding claim, wherein said pipe (10) branches from an enclosed water-impervious conduit, and wherein a second pipe also having an annular water-impervious wall (14) and an opening (15) extending across the wall (14) branches from the conduit, a second sheet (16) being disposed radially outwardly of the wall of the second pipe (10), the second sheet (16) extending over the opening (15) of the second pipe (10) and over a region of the wall (14) of the second pipe (10) surrounding the opening (15) of the second pipe (10) and having a face facing outwardly from the wall (14) of the second pipe (10) and a second water-impervious member (17) disposed radially outwardly of the second sheet (10) and extending over the opening (15) of the second pipe (10) and over an area of the wall (14) of the second pipe (10) surrounding the opening (15) of the second pipe (10), the second member (17) extending partially over the face of the second sheet (16) such that the face of the second sheet (16) has an exposed region (20) over which the second member (17) does not extend and which is spaced from the opening (15) of the second pipe (10), the second sheet (16) being water-absorbent such that water from the opening (15) of the second pipe (10) is drawn into the second sheet (16) and permeates through the second sheet (16) between the wall (14) of the second pipe (10) and the second member (17) to the exposed region (20) of the second sheet (10) for release therefrom to soil or plant roots.

7. A system according to claim 11, wherein the first-mentioned pipe (10) and the second pipe (10) are ones of three or more such pipes branching from the conduit.

8. A system according to claim 11 or claim 12, wherein at least one end of the conduit is connected to an outlet of a tank (12).

9. A plant watering system comprising an annular-sectioned pipe (10) having a water-impervious wall (14) and a plurality of holes (15) each connecting the interior and exterior surfaces of the pipe (10) for passage of water from the pipe (10), the holes (15) being spaced from one another along the pipe, characterised by a corresponding number of arcuate water-absorbent members (16), each water-absorbent member (16) covering a respective one of the holes (15), the inner surface of each water-absorbent member (16) lying against a region of the outer surface of the pipe (10) surrounding the corresponding hole (15), each water-absorbent member (16) being held against the pipe (10) by a respective one of a corresponding number of arcuate water-impervious members (17), the inner surface of each water-impervious member (17) lying against the outer surface of the corresponding water-absorbent member (16), each water-impervious member (17) lying radially outward of the corresponding hole (15) and covering all the pipe wall (14) around the corresponding hole (15), and each water-absorbent member (16) having a region (20) which protrudes from an edge of the corresponding water-impervious member (17), water from each hole (15) being drawn into the corresponding water-absorbent member (16) and permeating through said corresponding member (16) to the protruding region (20) thereof for release therefrom to soil or plant roots.

10. A system according to claim 9, wherein each water-absorbent member (16) is formed from a sheet of cellulose.

11. A system according to claim 9, wherein each water-absorbent member (16) is formed from a hydrophilic sheet comprising a polymer, glass fibre or other material which is not degraded significantly by chemical or biological agents in soil.

12. A system according to any one of claims 1 to 8, 10 or 11, wherein the or each sheet (16) has a thickness of 0.05 mm to 3 mm, measured while the sheet is being compressed by a pressure of 1 kgf/cm².

13. A system according to any one of claims 1 to 5 or 9 to 11, wherein one or each end of the pipe (10) is connected to an outlet of a tank (12) or respective outlets of respective tanks (12).

14. A system according to claim 13, wherein the or each tank (12) has an inlet associated with a device for controlling the passage of water through the inlet dependent on the level of water in the tank (12).

15. A system according to any preceding claim, wherein the or each sheet (16) or water-absorbent member (16) releases water to soil at a rate dependent on the water content of the soil.

16. A system according to any preceding claim, wherein the or each sheet (16) or water-absorbent member (16) is releasably attached to the pipe (10).

17. A system according to any preceding claim, wherein the or each hole (15) or opening (15) is generally cylindrical and has a diameter of 1 mm to 10 mm, preferably 2 mm.

18. A system according to any preceding claim, wherein the water-impervious members (17) are flexible.
